# EUROPEAN PATENT APPLICATION

(11) **EP 2 433 504 A1**
(43) Date of publication of application: **28.03.2012**
(21) Application number: 11010136.7
(22) Date of filing: 14.03.2008
(51) Int. Cl.: A23L 1/22, A23L 1/236, A23L 2/56, A23L 2/60

(54) **Use of long chain fatty acids for reducing off-taste of non-nutritive sweeteners**

(30) Priority: 14.03.2007 US 686269
(62) Divisional of application: 08743894.1
(71) Applicant: The Concentrate Manufacturing Company of Ireland, Hamilton HM 12 (BM)
(72) Inventor: Johnson, Winsome, Ossining, NY 10562-1983 (US); Lee, Thomas, Scarsdale, NY 10583 (US)
(74) Representative: Duxbury, Stephen

(57) **Abstract**

Aspects of the invention relate to beverage compositions, including, for example, concentrated and ready-to-drink formulations sweetened with at least one non-nutritive sweetener and further including a long chain fatty acid compound in an amount sufficient to reduce the off-note taste of the non-nutritive sweetener. In certain embodiments, the long chain fatty acid may be one or more of the following: lauric acid, myristic acid, palmitic acid, stearic acid, arachidic acid, behenic acid, oleic acid, linoleic acid, alpha-linolenic acid, arachidonic acid, eicosapentaenoic acid, docosahexaenoic acid, erucic acid, adipic acid, and palmitic acid. In certain exemplary embodiments, a plurality of different long chain fatty acids are utilized. In another embodiment, the long chain fatty acids comprise both natural and synthetic fatty acids.

## Description

This application claims priority to U.S. provisional Application Serial No. 11/686,269, filed March 14, 2007 and entitled *Long Chain Fatty Acids for Reducing Off-Taste of Non-Nutritive Sweeteners* (Attorney Docket No. 056943.00029).

### FIELD OF THE INVENTION

This invention relates to beverages and other beverage products, such as beverage concentrates and the like. In particular, this invention relates to beverages and other beverage products having formulations incorporating non-nutritive sweeteners and having suitable to meet market demand for nutritional characteristics and/or flavor profiles in beverages.

### BACKGROUND

It has long been known to produce beverages of various formulations. Improved and new formulations are desirable to meet changing market demands. In particular, there is perceived market demand for beverages having alternative nutritional characteristics, including, for example, alternative calorie content. Also, there is perceived market demand for beverages having alternative flavor profiles, including good taste, mouthfeel, etc. In addition, there is consumer interest in beverages and other beverage products, such as beverage concentrates, etc. whose formulations make greater use of natural ingredients, that is, ingredients distilled, extracted, concentrated or similarly obtained from harvested plants and other naturally occurring sources, with limited or no further processing.

The development of new beverage formulations, for example, new beverage formulations employing alternative sweeteners, flavorants, flavor enhancing agents and the like, presents challenges in addressing associated bitterness and/or other off-tastes. In addition, such challenges typically are presented in new beverage formulations developed for alternative nutritional and/or flavor profiles. Also, there is need for new beverage formulations which can satisfactorily meet the combination of objectives including nutritional characteristics, flavor, shelf life, and other objectives.

Development of new beverage formulations has faced obstacles. For example, U.S. patent No. 4,956,191, incorporated herein by reference in its entirety, suggests that carbonated beverages which contain blends of saccharin or the Stevia extract with aspartame tend to be less organoleptically pleasing than those containing sugar.

It is therefore an object of the present invention to provide beverages and other beverage products. It is an object of at least certain embodiments of the invention (that is, not necessarily all embodiments of the invention) to provide beverages and other beverage products having desirable taste properties. It is an object of at least certain (but not necessarily all) embodiments of the invention to provide beverages and other beverage products having improved formulations. These and other objects, features and advantages of the invention or of certain embodiments of the invention will be apparent to those skilled in the art from the following disclosure and description of exemplary embodiments.

### BRIEF SUMMARY

In accordance with one aspect, a beverage is provided. The beverage is sweetened with at least one non-nutritive sweetener and further comprises at least one natural or synthetic long chain fatty acid compound in an amount sufficient to reduce (i.e., to partially, substantially or completely eliminate) an off-note taste of the non-nutritive sweetener. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages. The correlative meaning applies to beverage concentrates and other beverage products disclosed here. In certain exemplary embodiments, the beverage may be a diet beverage. The beverage may be sweetened entirely with one or more non-nutritive sweeteners or with a combination of nutritive and non-nutritive sweeteners.

Unless clearly stated otherwise, reference here to a non-nutritive sweetener or to a non-nutritive sweetener component means one or more non-nutritive sweeteners. That is, the non-nutritive sweetener may be a single sweetener or a combination of non-nutritive sweeteners. In those embodiments employing multiple non-nutritive sweeteners, the off taste may be contributed by one or more of them. Different off-note tastes may be contributed by different ones of the non-nutritive sweeteners, and one or more long chain fatty acids may be used in accordance with this disclosure to reduce one or more of such multiple off-note tastes. In certain exemplary embodiments the same long chain fatty acid composition reduces multiple different off-note tastes. In other embodiments, the long chain fatty acid composition is a combination of multiple fatty acids, each of which is differently efficacious in reducing the multiple off-note tastes. In certain exemplary embodiments the non-nutritive sweetener is used together with nutritive sweetener, e.g., sugar, glucose-fructose syrup from natural sources such as apple, chicory, honey, etc., e.g., high fructose corn syrup (HFCS), Lo Han Guo juice concentrate or the like.

In certain embodiments, the long chain fatty acid may be one or more of the following: lauric acid, myristic acid, stearic acid, arachidic acid, behenic acid, oleic acid, linoleic acid, alpha-linolenic acid, arachidonic acid, eicosapentaenoic acid, docosahexaenoic acid, erucic acid, adipic acid, and palmitic acid. In certain exemplary embodiments, the weight percent of the long chain fatty acid compound or combination of long chain fatty acid compounds in the beverage is between about 0.001 % and about 1.0 %, e.g., between about 0.05% and about 0.55%. In certain exemplary embodiments, the concentration of long chain fatty acid compounds in the beverage is between about 50 parts per trillion and about 500 parts per million, e.g., between about 1 part per million and about 250 parts per million. As used here, an off-note taste in any taste or flavor feature of the non-nutritive sweetener which is unpleasant or otherwise undesirable in the beverage products, such as, for example, a bitter aftertaste, metallic taste or the like. In select embodiments, a plurality of long chain fatty acids are utilized. In certain embodiments, the plurality of long chain fatty acids comprise both natural and synthetic fatty acids.

In accordance with another aspect, a beverage concentrate is provided. In certain exemplary embodiments, the beverage concentrate is a syrup. In yet other exemplary embodiments, the beverage concentrate is a dry powder mix. The beverage syrup is sweetened with at least one non-nutritive sweetener and further comprises at least one natural or synthetic long chain fatty acid compound in an amount sufficient to reduce an off-note taste of the non-nutritive sweetener. In select embodiments, a plurality of long chain fatty acids are utilized. In certain embodiments, the plurality of long chain fatty acids comprise both natural and synthetic fatty acids.

In accordance with yet another aspect, a sweetener product is provided. In certain exemplary embodiments, the sweetener product comprises at least one non-nutritive sweetener having an off-note taste and further comprises a long chain fatty acid compound in an amount sufficient to reduce the off-note taste of the non-nutritive sweetener.

In certain embodiments, the long chain fatty acid may be one or more of the following: lauric acid, myristic acid, stearic acid, arachidic acid, behenic acid, oleic acid, linoleic acid, alpha-linolenic acid, arachidonic acid, eicosapentaenoic acid, docosahexaenoic acid, erucic acid, adipic acid, and palmitic acid. In certain exemplary embodiments, the weight percent of the long chain fatty acid compound or combination of long chain fatty acid compounds in the beverage is between about 0.001 % and about 1.0 %, e.g., between about 0.05% and about 0.55%. In certain exemplary embodiments, the concentration of long chain fatty acid compounds in the beverage is between about 50 parts per trillion and about 500 parts per million, e.g., between about 1 part per million and about 250 parts per million.

In accordance with another aspect, a clear beverage is provided comprising water, at least one non-nutritive sweetener having an off-note taste, and at least one off-note taste masking long chain fatty acid compound, said long chain fatty acid compound present in an amount sufficient to reduce the off-note taste of the at least one non-nutritive sweetener. As used here, substantially clear means that the beverages have substantially no turbidity and substantially no color.

It will be appreciated by those skilled in the art, given the benefit of the following description of certain exemplary embodiments of the beverage and other beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### DETAILED DESCRIPTION OF CERTAIN EXEMPLARY EMBODIMENTS

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastents, masking agents and the like, flavor enhancers, and/or carbonation typically can be added to any such formulations to vary the taste, mouthfeel, nutritional characteristics, etc. In general, a beverage in accordance with this disclosure typically comprises at least water, sweetener, acidulant and flavoring. Exemplary flavorings which may be suitable for at least certain formulations in accordance with this disclosure include cola flavoring, citrus flavoring, spice flavorings and others. Carbonation in the form of carbon dioxide may be added for effervescence. Preservatives can be added if desired, depending upon the other ingredients, production technique, desired shelf life, etc. Optionally, caffeine can be added. Certain exemplary embodiments of the beverages disclosed here are cola-flavored carbonated beverages, characteristically containing carbonated water, sweetener, kola nut extract and/or other flavoring, caramel coloring, phosphoric acid, and optionally other ingredients. Additional and alternative suitable ingredients will be recognized by those skilled in the art given the benefit of this disclosure.

The beverage products disclosed here include beverages, i.e., ready to drink liquid formulations, beverage concentrates and the like. Beverages include, e.g., carbonated and non-carbonated soft drinks, fountain beverages, frozen ready-to-drink beverages, coffee beverages, tea beverages, dairy beverages, powdered soft drinks, as well as liquid, slurry or solid concentrates, flavored waters, enhanced waters, fruit juice and fruit juice-flavored drinks, sport drinks, and alcoholic products. At least certain exemplary embodiments of the beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from about 80% to about 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. Patent No. 7,052,725. Methods of producing treated water are known to those of ordinary skill in the art and include deionization, distillation, filtration and reverse osmosis ("r-o"), among others. The terms "treated water," "purified water,", "demineralized water," "distilled water," and "r-o water" are understood to be generally synonymous in this discussion, referring to water from which substantially all mineral content has been removed, typically containing no more than about 500 ppm total dissolved solids, e.g. 250 ppm total dissolved solids.

As used herein, "taste" refers to a combination of sweetness perception, temporal effects of sweetness perception, i.e., on-set and duration, off-tastes, e.g. bitterness and metallic taste, residual perception (aftertaste) and tactile perception, e.g. body and thickness. As used herein, a "full-calorie" beverage formulation is one fully sweetened with a nutritive sweetener. The term "nutritive sweetener" refers generally to sweeteners which provide significant caloric content in typical usage amounts, e.g., more than about 5 calories per 8 oz. serving of beverage. As used herein, a "potent sweetener" means a sweetener which is at least twice as sweet as sugar, that is, a sweetener which on a weight basis requires no more than half the weight of sugar to achieve an equivalent sweetness. For example, a potent sweetener may require less than one-half the weight of sugar to achieve an equivalent sweetness in a beverage sweetened to a level of 10 degrees Brix with sugar. Potent sweeteners include both nutritive (e.g., Lo Han Guo juice concentrate) and non-nutritive sweeteners (e.g., typically, Lo Han Guo powder). In addition, potent sweeteners include both natural potent sweeteners (e.g., steviol glycosides, Lo Han Guo, etc.) and artificial potent sweeteners (e.g., neotame, etc.). However, for natural beverage products disclosed here, only natural potent sweeteners are employed. Commonly accepted potency figures for certain potent sweeteners include, for example,

| | |
|---|---|
| Cyclamate | 30 times as sweet as sugar |
| Stevioside | 100-250 times as sweet as sugar |
| Mogroside V | 100-300 times as sweet as sugar |
| Rebaudioside A | 150-300 times as sweet as sugar |
| Acesulfame-K | 200 times as sweet as sugar |
| Aspertame | 200 times as sweet as sugar |
| Saccharine | 300 times as sweet as sugar |
| Neohesperidin dihydrochalcone | 300 times as sweet as sugar |
| Sucralose | 600 times as sweet as sugar |
| Neotame | 8,000 times as sweet as sugar |

As used herein, a "non-nutritive sweetener" is one which does not provide significant caloric content in typical usage amounts, i.e., is one which imparts less than 5 calories per 8 oz. serving of beverage to achieve the sweetness equivalent of 10 Brix of sugar. As used herein, "reduced calorie beverage" means a beverage having at least a 25% reduction in calories per 8 oz. serving of beverage as compared to the full calorie version, typically a previously commercialized full-calorie version. As used herein, a "low-calorie beverage" has fewer than 40 calories per 8 oz. serving of beverage. As used herein, "zero-calorie" or "diet" means having less than 5 calories per serving, e.g., per 8 oz. for beverages.

Natural embodiments of the beverage products disclosed here are natural in that they do not contain anything artificial or synthetic (including any color additives regardless of source) that would not normally be expected to be in the food. As used herein, therefore, a "natural" beverage composition is defined in accordance with the following guidelines: Raw materials for a natural ingredient exists or originates in nature. Biological synthesis involving fermentation and enzymes can be employed, but synthesis with chemical reagents is not utilized. Artificial colors, preservatives, and flavors are not considered natural ingredients. Ingredients may be processed or purified through certain specified techniques including at least: physical processes, fermentation, and enzymolysis. Appropriate processes and purification techniques include at least: absorption, adsorption, agglomeration, centrifugation, chopping, cooking (baking, frying, boiling, roasting), cooling, cutting, chromatography, coating, crystallization, digestion, drying (spray, freeze drying, vacuum), evaporation, distillation, electrophoresis, emulsification, encapsulation, extraction, extrusion, filtration, fermentation, grinding, infusion, maceration, microbiological (rennet, enzymes), mixing, peeling, percolation, refrigeration/freezing, squeezing, steeping, washing, heating, mixing, ion exchange, lyophilization, osmose, precipitation, salting out, sublimation, ultrasonic treatment, concentration, flocculation, homogenization, reconstitution, enzymolysis (using enzymes found in nature). Processing aids (currently defined as substances used as manufacturing aids to enhance the appeal or utility of a food component, including clarifying agents, catalysts, flocculants, filter aids, and crystallization inhibitors, etc. See 21 CFR § 170.3(o)(24)) are considered incidental additives and may be used if removed appropriately.

Sweeteners suitable for use in various embodiments of the beverages disclosed here include nutritive and non-nutritive, natural and artificial or synthetic sweeteners. Suitable non-nutritive sweeteners and combinations of such sweeteners are selected for the desired nutritional characteristics, taste profile for the beverage, mouthfeel and other organoleptic factors. Non-nutritive sweeteners suitable for at least certain exemplary embodiments include, for example, peptide based sweeteners, e.g., aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. Alitame may be less desirable for caramel-containing beverages where it has been known to form a precipitate. In certain exemplary embodiments the beverage product employs aspartame as the sweetener, either alone or with other sweeteners. In certain other exemplary embodiments the sweetener comprises aspartame and acesulfame potassium. Other non-nutritive sweeteners suitable for at least certain exemplary embodiments include, for example, sorbitol, mannitol, xylitol, glycyrrhizin, neohesperidin dihydrochalcone, D-tagatose, erythritol, meso-erythritol, malitol, maltose, lactose, fructo-oligosaccharides, Lo Han Guo powder, steviol glycosides, e.g., rebaudiosides such as Rebaudioside A, stevioside, etc. acesulfame, aspartame, other dipeptides, cyclamate, sucralose, saccharin, xylose, arabinose, isomalt, lactitol, maltitol, trehalose, and ribose, and protein sweeteners such as thaumatin, monellin, brazzein, L-alanine and glycine, related compounds, and mixtures of any of them. Lo Han Guo, steviol glycosides, e.g., rebaudiosides such as Rebaudioside A, stevioside, etc. and related compounds, as discussed further below, are natural potent sweeteners. It will be within the ability of those skilled in the art, given the benefit of this disclosure, to select suitable non-nutritive sweetener (e.g., one or combination of non-nutritive sweeteners, either alone or together with nutritive sweetener) for a particular embodiment of the beverage products disclosed here employing long chain fatty acid to mask an off-note taste of the nonnutritive sweetener.

In at least certain exemplary embodiments of the beverages disclosed here, the sweetener component can include nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, Lo Han Guo juice concentrate and/or others. Such sweeteners are present in at least certain exemplary embodiments in an amount of from about 0.1 % to about 20% by weight of the beverage, such as from about 6% to about 16% by weight, depending upon the desired level of sweetness for the beverage. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of nonsugar solids which could adversely affect the flavor, color or consistency of the beverage.

The sweeteners are edible consumables suitable for consumption and for use in beverages. By "edible consumables" is meant a food or beverage or an ingredient of a food or beverage for human or animal consumption. The sweetener or sweetening agent used here and in the claims can be a nutritive or non-nutritive, natural or synthetic beverage ingredient or additive (or mixtures of them) which provides sweetness to the beverage, i.e., which is perceived as sweet by the sense of taste. The perception of flavoring agents and sweetening agents may depend to some extent on the interrelation of elements. Flavor and sweetness may also be perceived separately, i.e., flavor and sweetness perception may be both dependent upon each other and independent of each other. For example, when a large amount of a flavoring agent is used, a small amount of a sweetening agent may be readily perceptible and vice versa. Thus, the oral and olfactory interaction between a flavoring agent and a sweetening agent may involve the interrelationship of elements.

Non-nutritive, high potency sweeteners typically are employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

As mentioned above, at least certain exemplary embodiments of the beverages disclosed here employ steviol glycosides, e.g., rebaudiosides such as Rebaudioside A, stevioside, etc. or related compounds, or mixtures of any of them, for sweetening. These compounds can be obtained by extraction or the like from the stevia plant. Stevia (e.g., Stevia rebaudiana bectoni) is a sweet-tasting plant. The leaves contain a complex mixture of natural sweet diterpene glycosides. Steviol glycosides, e.g., rebaudiosides such as Rebaudioside A, stevioside, etc. are components of Stevia that contribute sweetness. Typically, these compounds are found to include stevioside (4-13% dry weight), steviolbioside (trace), the rebaudiosides, including rebaudioside A (2-4%), rebaudioside B (trace), rebaudioside C (1-2%), rebaudioside D (trace), and rebaudioside E (trace), and dulcoside A (0.4-0.7%). The dry weight composition is given as protein ∼6.2%, lipids ∼5.6%, total carbohydrates ∼52.8%, stevioside∼15% (1) and about 42% water-soluble substances. The following nonsweet constituents also have been identified in the leaves of stevia plants: labdane, diterpene, triterpenes, sterols, flavonoids, volatile oil constituents, pigments, gums and inorganic matter.

The sweetener Lo Han Guo, which has various different spellings and pronunciations and is abbreviated here in some instances as LHG, can be obtained from fruit of the plant family Cucurbitaceae, tribe Jollifieae, subtribe Thladianthinae, genus Siraitia. LHG often is obtained from the genus/species S. grosvenorii, S. siamensis, S. silomaradjae, S. sikkimensis, S. africana, S. borneensis, and S. taiwaniana. Suitable fruit includes that of the genus/species S. grosvenorii, which is often called Lo Han Guo fruit. LHG contains triterpene glycosides or mogrosides, which constituents may be used as LHG.sweeteners. Lo Han Guo is a potent sweetener which can be provided as a natural nutritive or natural non-nutritive sweetener. For example, Lo Han Guo juice concentrate may be a nutritive sweetener, and Lo Han Guo powder may be a non-nutritive sweetener. Lo Han Guo can be used as the juice or juice concentrate, powder, etc. Preferably LHG juice contains at least about 0.1%, e.g., from 0.1% to about 15%, mogrosides, preferably mogroside V, mogroside IV, (11-oxo-mogroside V), siamenoside and mixtures thereof. LHG can be produced, for example, as discussed in U.S. Patent No. 5,411,755, incorporated herein by reference in its entirety. Sweeteners from other fruits, vegetables or plants also may be used as natural or processed sweeteners or sweetness enhancers in at least certain exemplary embodiments of the beverages disclosed here.

According to certain embodiments of the invention, one or more long-chain fatty acids are utilized to mask one or more off-note tastes of non-nutritive sweetener(s) present in a beverage or concentrate of a beverage. As used herein, the terms "long-chain fatty acid" or "L.C.F.A." include any organic acids having the general formula CₙH₂ₙ₊₁COOH. In certain exemplary embodiments the value of n is at least about 12. The fatty acids are composed of unbranched chains of hydrocarbons ending in a carboxyl group. The carboxyl group may bond to glycerol to form a fat. Likewise, as discussed below, glycerol may be removed from fats to create synthetic fatty acids. Illustrative long-chain fatty acids include, for example, lauric acid, myristic acid, palmitic acid, stearic acid, arachidic acid, and behenic acid.

Further, as utilized herein, the long-chain fatty acids may be either saturated or unsaturated. In saturated fatty acids, the carbon atoms of the unbranched chains are each connected to the neighboring carbon atoms by single bonds. Illustrative examples of unsaturated long-chain fatty acids include oleic acid, linoleic acid, alpha-linolenic acid, arachidonic acid, eicosapentaenoic acid, docosahexaenoic acid and erucic acid. Conversely, if at least one double bond connects two neighboring carbon atoms, the fatty acid is referred to as "unsaturated." The long-chain fatty acids, as utilized within the scope of the invention, may include both natural and synthetic forms of organic acids. In certain exemplary embodiments, both synthetic and natural fatty acids are used in conjunction to achieve one or more benefits, such as reducing the off-note taste of one or more non-nutritive sweeteners. Naturally occurring long chain fatty acids may be derived from animal and vegetable fats. Representative natural fatty acids include, for example, palmitic acid, stearic acid, and oleic acids.

Synthetic fatty acids may be produced by a wide variety of methods known to those skilled in the art. As one example, fatty acids may be produced by hydrolyzing the ester linkages in fat and/or oil by removal of glycerol.

In at least certain exemplary embodiments of the beverage products disclosed here, the long chain fatty acid is a masking agent for masking one or more off-notes of one or more non-nutritive sweeteners. For example, while non-nutritive sweeteners provide a characteristic and desirable sweet flavor, non-nutritive sweeteners may also provide nonsweet off-notes. For example, steviol glycosides, e.g., rebaudiosides such as Rebaudioside A, stevioside, etc. and other non-nutritive sweeteners are often accompanied by metallic or bitter off-notes. Thus, according to certain embodiments of the invention, one or more long chain fatty acid compounds are utilized in an amount sufficient to reduce the off-note taste of the non-nutritive sweetener. The exact type and/or quantity of the long chain fatty acid(s) compounds used to mask the off notes depend on a myriad of factors, including the type of beverage, environmental conditions in manufacturing, distributing and storing the beverages, the beverage flavor profile, pH of the beverage, among other factors.

Acid used in beverages disclosed here refers to non-long chain fatty acids and can serve any one or more of several functions, including, for example, lending tartness to the taste of the beverage, enhancing palatability, increasing thirst quenching effect, modifying sweetness and acting as a mild preservative. Suitable acids are known and will be apparent to those skilled in the art given the benefit of this disclosure. Exemplary acids suitable for use in some or all embodiments of the beverage products disclosed here include phosphoric acid, citric, malic, tartaric, lactic, formic, ascorbic, fumaric, gluconic, succinic, maleic and adipic and mixtures of any of them. The acid can be used in solution form, for example, and in an amount sufficient to provide the desired pH of the beverage. Typically, for example, the one or more acids of the acidulant are used in amount, collectively, of from about 0.01% to about 1.0% by weight of the beverage, e.g., from about 0.05% to about 0.5% by weight of the beverage, such as 0.1 % to 0.25% by weight of the beverage, depending upon the acidulant used, desired ph, other ingredients used, etc. The pH of at least certain exemplary embodiments of the beverages disclosed here can be a value within the range of from about 2.0 to about 5.0. The acid in certain exemplary embodiments enhances beverage flavor. Too much acid can impair the beverage flavor and result in sourness or other off-taste, while too little acid can make the beverage taste flat.

The particular acid or acids chosen and the amount used will depend, in part, on the other ingredients, the desired shelf life of the beverage product, as well as effects on the beverage pH, titratable acidity, and taste. Those skilled in the art, given the benefit of this disclosure, will recognize that when preparing beverage products containing peptide-based artificial sweeteners such as aspartame, the resulting beverage composition is best maintained below a certain pH to retain the sweetening effect of the artificial sweetener. In the formation of calcium-supplemented beverages, the presence of calcium salts increases the pH which requires additional acids to both assist the dissolution of the salt and maintain a desirable pH for stability of the artificial sweetener. The presence of the additional acid in the beverage composition, which increases the titratable acidity of the composition, will result in a more tart or sour taste to the resulting beverage. It will be within the ability of those skilled in the art, given the benefit of this disclosure, to select a suitable acid or combination of acids and the amounts of such acids for the acidulant component of any particular embodiment of the beverage products disclosed here.

Certain exemplary embodiments of the beverage products disclosed here also may contain small amounts of alkaline agents to adjust pH. Such agents include, e.g., potassium hydroxide, sodium hydroxide and potassium carbonate. For example, the alkaline agent potassium hydroxide may be used in an amount of from about 0.02 to about 0.04% by weight, with an amount of about 0.03% being typical for certain beverages. The amount will depend, of course, on the type of alkaline agents and on the degree to which the pH is to be adjusted.

The beverage products disclosed here optionally contain a flavor composition, for example, natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of various of the above-mentioned flavors. In certain exemplary embodiments of the beverage concentrates and beverages a cola flavor component is used or a tea flavor component. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices can be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices can be combined, optionally along with other flavorings, to generate a beverage having the desired flavor. Examples of suitable juice sources include plum, prune, date, currant, fig, grape, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, litchi, lemon, orange, lime, tangerine, tangerine, mandarin orange, tangelo, and pomelo and grapefruit etc. Numerous additional and alternative juices suitable for use in at least certain exemplary embodiments will be apparent to those skilled in the art given the benefit of this disclosure. In the beverages of the present invention employing juice, juice may be used, for example, at a level of at least about 0.2% by weight of the beverage. In certain exemplary embodiments juice is employed at a level of from about 0.2% to about 40% by weight of the beverage. Typically, juice can be used, if at all, in an amount of from about 1% to about 20% by weight.

Certain such juices which are lighter in color can be included in the formulation of certain exemplary embodiments to adjust the flavor and/or increase the juice content of the beverage without darkening the beverage color. Examples of such juices include apple, pear, pineapple, peach, lemon, lime, orange, apricot, grapefruit, tangerine, rhubarb, cassis, quince, passion fruit, papaya, mango, guava, litchi, kiwi, mandarin, coconut, and banana. Deflavored and decolored juices can be employed if desired.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than about 3% of the mixture of flavorings and emulsifier. In certain exemplary embodiments the emulsifier is from about 5% to about 30% of the mixture.

Carbon dioxide is used to provide effervescence to certain exemplary embodiments of the beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to about 7.0 volumes carbon dioxide. Typical embodiments may have, for example, from about 0.5 to 5.0 volumes of carbon dioxide. As used here and independent claims, one volume of carbon dioxide is defined as the amount of carbon dioxide absorbed by any given quantity of water at 60° F (16° C) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

Optionally, caffeine can be added to various embodiments of the beverages disclosed here. The amount of caffeine added is determined by the desired beverage properties, any applicable regulatory provisions of the country where the beverage is to be marketed, etc. In certain exemplary embodiments caffeine is included at a level of 0.02 percent or less by weight of the beverage. The caffeine must be of a purity acceptable for use in foods and beverages. The caffeine can be natural or synthetic in origin.

The beverage concentrates and beverages disclosed here may contain additional ingredients, including, generally, any of those typically found in beverage formulations. These additional ingredients, for example, can typically be added to a stabilized beverage concentrate. Examples of such additional ingredients include, but are not limited to, caffeine, caramel and other coloring agents or dyes, antifoaming agents, gums, emulsifiers, tea solids, cloud components, and mineral and non-mineral nutritional supplements. Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₆, B₁₂, and K, niacin, folic acid, biotin, and combinations thereof. The optional non-mineral nutritional supplements are typically present in amounts generally accepted under good manufacturing practices. Exemplary amounts are between about 1% and about 100% RDV, where such RDV are established. In certain exemplary embodiments the non-mineral nutritional supplement ingredient(s) are present in an amount of from about 5% to about 20% RDV, where established.

Preservatives may be used in at least certain embodiments of the beverages disclosed here. That is, at least certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), and mixtures thereof, and antioxidants such as ascorbic acid, EDTA, BHA, BHT, TBHQ, dehydroacetic acid, dimethyldicarbonate, ethoxyquin, heptylparaben, and combinations thereof. Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is about 0.05% by weight of the beverage. It will be within the ability of those skilled in the art, given the benefit of this disclosure, to select a suitable preservative or combination of preservatives for beverages according to this disclosure.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. Discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., about 190° F for 10 seconds, tunnel pasteurization methods typically using lower temperatures for a longer time, e.g., about 160° F for 10-15 minutes, and retort methods typically using, e.g., about 250° F for 3-5 minutes at elevated pressure, i.e., at pressure above 1 atmosphere.

Those of ordinary skill in the art will understand that, for convenience, some ingredients are described here in certain cases by reference to the original form of the ingredient in which it is used in formulating or producing the beverage product. Such original form of the ingredient may differ from the form in which the ingredient is found in the finished beverage product. Thus, for example, in certain exemplary embodiments of the beverage products according to this disclosure, sucrose and liquid sucrose would typically be substantially homogenously dissolved and dispersed in the beverage. Likewise, other ingredients identified as a solid, concentrate (e.g., juice concentrate), etc. would typically be homogenously dispersed throughout the beverage or throughout the beverage syrup, rather than remaining in their original form. Thus, reference to the form of an ingredient of a beverage product formulation should not be taken as a limitation on the form of the ingredient in the beverage product, but rather as a convenient means of describing the ingredient as an isolated component of the product formulation.

Notwithstanding the claims, the invention is also referred to in the following clauses.
1. A beverage comprising:
   water;
   at least one non-nutritive sweetener having an off-note taste; and
   at least one off-note taste masking long chain fatty acid compound, said long chain fatty acid compound present in an amount sufficient to reduce the off-note taste of the at least one non-nutritive sweetener.
2. The beverage of Clause 1, wherein the at least one non-nutritive sweetener is selected from the group consisting of a steviol glycoside, Lo Han Guo and combinations thereof.
3. The beverage according to Clause 1, further comprising nutritive sweeteners.
4. The beverage of Clause 1, wherein the at least one long chain fatty acid compound is selected from the group consisting of: lauric acid, myristic acid, stearic acid, arachidic acid, behenic acid, oleic acid, linoleic acid, alpha-linolenic acid, arachidonic acid, eicosapentaenoic acid, docosahexaenoic acid, erucic acid, palmitic acid, adipic acid and combinations thereof.
5. The beverage of Clause 1, wherein the concentration of the one or more long chain fatty acid compounds is between about 50 parts per trillion and about 500 parts per million.
6. The beverage of Clause 2, wherein the non-nutritive sweetener comprises rebaudioside A.
7. The beverage of Clause 1, wherein the at least one long chain fatty acid is natural.
8. The beverage Clause 1, further comprising erythritol and d-tagatose.
9. The beverage of Clause 1, further comprising a flavoring selected from the group consisting of cola flavors, juices, fruit flavors, botanical flavors, spices, and combinations thereof.
10. The beverage of Clause 9, wherein the concentration of the at least one long chain fatty acid is between about 1 part per million to about 250 parts per million.
11. A beverage syrup for a beverage comprising:
   at least one non-nutritive sweetener having an off-note taste; and
   an off-note taste masking long chain fatty acid compound, said long chain fatty acid compound present in an amount sufficient to reduce the off-note taste of the non-nutritive sweetener when the syrup is mixed with a diluent to make a beverage.
12. The beverage syrup of Clause 11, wherein the concentrate is a syrup.
13. The beverage syrup of Clause 11, wherein the at least one non-nutritive sweetener is selected from the group consisting of a steviol glycoside, Lo Han Guo and combinations thereof.
14. The beverage syrup according to Clause 13, further comprising nutritive sweetener.
15. The beverage syrup of Clause 11, wherein the at least one long chain fatty acid compound is selected from the group consisting of: lauric acid, myristic acid, stearic acid, arachidic acid, behenic acid, oleic acid, linoleic acid, alpha-linolenic acid, arachidonic acid, eicosapentaenoic acid, docosahexaenoic acid, erucic acid, palmitic acid, adipic acid and any combinations thereof.
16. The beverage syrup of Clause 11, wherein the at least one long chain fatty acid compound is oleic acid and the non-nutritive sweetener is Lo Han Guo.
17. The beverage syrup of Clause 11, wherein the concentration of the one or more long chain fatty acids is between about 50 parts per trillion and about 500 parts per million.
18. A sweetener product comprising:
   at least one non-nutritive sweetener having an off-note taste; and
   an off-note taste masking long chain fatty acid compound, said long chain fatty acid compound present in an amount sufficient to reduce the off-note taste of the non-nutritive sweetener.
19. The sweetener product of Clause 18, wherein the at least one non-nutritive sweetener is selected from the group consisting of a steviol glycoside, Lo Han Guo and combinations thereof.
20. The sweetener product of Clause 18, wherein the at least one long chain fatty acid compound is selected from the group consisting of: lauric acid, myristic acid, palmitic acid, stearic acid, arachidic acid, behenic acid, oleic acid, linoleic acid, alpha-linolenic acid, arachidonic acid, eicosapentaenoic acid, docosahexaenoic acid, erucic acid, palmitic acid, adipic acid and combinations thereof.
21. The sweetener product of Clause 18, wherein the concentration of the at least one long chain fatty acid compound is between about 50 parts per trillion to about 500 parts per million.
22. The beverage of Clause 1, wherein the weight percent of the one or more long chain fatty acid is between about 0.001 % and about 1.0%.
23. The beverage of Clause 1, wherein the weight percent of the one or more long chain fatty acid is between about 0.05% and about 0.55%.
24. The beverage of Clause 1, wherein the beverage is clear.

Given the benefit of the above disclosure and description of exemplary embodiments, it will be apparent to those skilled in the art that numerous alternative and different embodiments are possible in keeping with the general principles of the invention disclosed here. Those skilled in this art will recognize that all such various modifications and alternative embodiments are within the true scope and spirit of the invention. The appended claims are intended to cover all such modifications and alternative embodiments. It should be understood that the use of a singular indefinite or definite article (e.g., "a," "an," "the," etc.) in this disclosure and in the following claims follows the traditional approach in patents of meaning "at least one" unless in a particular instance it is clear from context that the term is intended in that particular instance to mean specifically one and only one. Likewise, the term "comprising" is open ended, not excluding additional items, features, components, etc.

## Claims

1. A sweetener comprising:
Rebaudioside D, and
a long chain fatty acid compound, said long chain fatty acid compound present in an amount sufficient to reduce an off-note taste of Rebaudioside D.

2. The sweetener according to claim 1 wherein,
the long chain fatty acid compound is selected from the group consisting of: lauric acid, myristic acid, stearic acid, arachidic acid, behenic acid, oleic acid, linoleic acid, alpha-linolenic acid, arachidonic acid, eicosapentaenoic acid, docosahexaenoic acid, erucic acid, palmitic acid ,and any combinations thereof.

3. The sweetener according to claims 1 or 2 further comprising nutritive sweeteners.

4. The sweetener according to any of the preceding claims 1-3, wherein the concentration of the one or more long chain fatty acid compounds is between about 50 parts per trillion and about 500 parts per million, preferably between 1 part per million to about 250 parts per million.

5. The sweetener according to any of the preceding claims wherein the long chain fatty acid is natural.

6. The sweetener according to any of the preceding claims, further comprising erythritol and d-tagatose.

7. The sweetener according to any of the preceding claims wherein the weight percent of the long chain fatty acid is between about 0.001% and about 1.0%, preferably wherein the weight percent of the long chain fatty acid is between about 0.05% and about 0.55%.

8. A beverage, or beverage syrup, containing a sweetener according to any of the preceding claims.

9. The beverage, or beverage syrup, according to claim 8, further comprising a diluents, preferably water.

10. The beverage, or beverage syrup, according to any of the claims 8 or 9 further including an acid and/or alkaline agent

11. The beverage, or beverage syrup, according to claim 10 having a pH in the range of 2.0-5.0.

12. The beverage, or beverage syrup, according to any of the claims 10 or 11 wherein the acid is present in the range of 0.01 %-1 % by weight of the beverage, for example from 0.05%-0.5%, preferably 0.1% to 0.25% by weight of the beverage, and/or wherein the alkaline agent is present in the range of 0.02-0.04 % by weight of the beverage, preferably 0.03% by weight of the beverage.

13. The beverage, or beverage syrup, according to any of the preceding claims 8-12, further comprising an emulsifying agent, which preferably comprises greater than about 3% of flavourings and emulsifiers, and is preferably in the range of 5-30% of the beverage.

14. Use of Rebaudioside D as a non-nutritive sweetener.

15. Use of a long chain fatty acid compound to mask an off-note taste of Rebaudioside D.
